(19) Europäisches Patentamt
European Patent Office
Office européen des brevets

(11) Veröffentlichungsnummer: **0 406 631 A2**

# (12) EUROPÄISCHE PATENTANMELDUNG

(21) Anmeldenummer: **90111804.2**

(22) Anmeldetag: **22.06.90**

(51) Int. Cl.5 **C08L 81/02**, C08L 21/00, //(C08L81/02,21:00),(C08L21/00, 81:02)

(30) Priorität: **05.07.89 DE 3922039**

(43) Veröffentlichungstag der Anmeldung: **09.01.91 Patentblatt 91/02**

(84) Benannte Vertragsstaaten: **BE DE FR GB IT**

(71) Anmelder: **BAYER AG**
**D-5090 Leverkusen 1 Bayerwerk(DE)**

(72) Erfinder: **Lütjens, Holger, Dr.**
**Rybniker Strasse 12**
**D-5000 Köln 80(SE)**
Erfinder: **Piejko, Karl-Erwin, Dr.**
**Unterscheider Weg 7A**
**D-5060 Bergisch Gladbach 2(DE)**
Erfinder: **Köhler, Karl-Heinz, Dr.**
**Buschstrasse 165**
**D-4150 Krefeld(DE)**
Erfinder: **Lindner, Christian, Dr.**
**Im Wasserblech 11**
**D-5000 Köln 91(DE)**

## (54) Polyarylensulfid/Kautschukmischungen und ein Verfahren zu deren Herstellung sowie deren Verwendung zur Herstellung geformter Körper.

(57) Die Erfindung betrifft ein Verfahren zur Herstellung von Polyarylensulfid, vorzugsweise Polyphenylensulfid/Kautschukmischungen sowie deren Verwendung zur Herstellung geformter Körper.

EP 0 406 631 A2

Xerox Copy Centre

# POLYARYLENSULFID/KAUTSCH UKMISCHUNGEN UND EIN VERFAHREN ZU DEREN HERSTELLUNG SOWIE DEREN VERWENDUNG ZUR HERSTELLUNG GEFORMTER KÖRPER

Die Erfindung betrifft ein Verfahren zur Herstellung von Polyarylensulfid, vorzugsweise Polyphenylensulfid/Kautschukmischungen sowie deren Verwendung zur Herstellung geformter Körper.

Die Mischungen zeichnen sich durch eine besonders gute, gleichmäßige Verteilung der Kautschuke (in Form diskreter Partikel) in der Polyarylensulfidmatrix aus und besitzen verbesserte anwendungstechnische Eigenschaften und bessere Qualitätskonstanz.

Polyarylensulfide (PAS), insbesondere das Polyphenylensulfid (PPS), sind aufgrund ihrer Eigenschaftprofile für die Elektrotechnik/Elektronik- und die Kraftfahrzeug-Industrie ein wertvoller Werkstoff. Einbettmassen z.B. für aktive und passive elektronische Bauelemente, Chipgehäuse, Relais, Steckerleisten und Leiterplatten sowie technische Teile für den Motorraum können aus PAS hergestellt werden.

PAS hat Flammfestigkeit, hohe Chemikalienbeständigkeit, hohe Temperaturbeständigkeit und hohe Wärmeformbeständigkeit. Die niedrige Schmelzviskosität ermöglicht eine hohe Aufnahme von Füllstoffen und/oder Verstärkungsfasern. Jedoch zeigt PAS eine geringe Randfaserdehnung und eine geringe Zähigkeit.

Bei speziellen Anwendungen ist aber eine höhere Schlagfestigkeit des PAS durchaus wünschenswert. Die Anhebung der Schlagzähigkeit kann üblicherweise durch Zusatz von speziellen Kautschuken oder Kautschukpolymerisaten zum Polyarylensulfid geschehen. Formmassen aus Polyarylensulfiden mit Dien- und Acrylatkautschuken sind z.B. in der EP-A 247412 und DE-A 3 616 131 beschrieben. Hierbei erfolgt die Herstellung der Formmassen über eine Schmelzcompoundierung. Ein Nachteil dieses Verfahrens ist, daß eine gleichmäßige Verteilung der Kautschukmikrogelteilchen (in Form diskreter Partikel) in der PAS-Matrix oft nur unzureichend erreicht wird.

Bekanntlich können Kautschukteilchen in Agglomeraten dicht zusammengelagert sein, wobei deren Abmessungen mehrere µm betragen. Derartige Agglomerate können sich nachteilig auf die Schlagfesteigenschaften eines Thermoplasten auswirken.

Es wurde nun gefunden, daß durch eine bestimmte Verfahrensweise unter Zuhilfenahme spezieller Lösungsmittel/Kautschuk-Dispersionen hergestellte PAS-Kautschuk-Mischungen hervorragende Dispergiergüte (bezogen auf die Kautschukphase) besitzen.

Gegenstand der Erfindung ist somit ein Verfahren zur Herstellung von Mischungen hoher Dispergiergüte aus 20 bis 90 Gew.-%, vorzugsweise 50 bis 80 Gew.-% Polyarylensulfiden, vorzugsweise Polyphenylensulfid und 10 bis 80 Gew.-%, vorzugsweise 50 bis 20 Gew.-% teilchenförmigen, wenigstens partiell vernetztem Kautschukpolymerisat, in dem man

a) ein Polyarylensulfid, vorzugsweise PPS, gegebenenfalls in einem Lösungsmittel, mit einer flüssigen Dispersion eines vernetzten, teilchenförmigen Kautschukpolymerisates in einem organischen Medium mit Löseeigenschaften für das Polyarylensulfid versetzt und

b) diese Polymerisatmischung aus Polyarylensulfid, vorzugsweise PPS und Kautschukpolymerisat anschließend aus dem organischen Medium isoliert,

Ein weiterer Gegenstand der Erfindung sind die nach dem erfindungsgemäßen Verfahren erhaltenen PAS/Kautschuk-Mischungen.

Als Medien werden bevorzugt organische Lösungsmittel wie Lactame, Amide, die bei Temperaturen von 10 bis 350 °C, vorzugsweise von 20 bis 320 °C, Polyarylensulfide lösen, z.B. N-Methylpyrrolidon, N-Methylcaprolactam, 1,3-Dimethyl-2-imidazolidinon.

Kautschukpolymerisate im Sinne der Erfindung sind Polymerisate mit Erweichungstemperaturen unterhalb 20 °C, bevorzugt unterhalb -20 °C. Sie sind diskrete Partikel und besitzen mittlere Teilchengrößen ($d_{50}$-Werte) von 0,05-3 µm. Sie sind wenigstens partiell vernetzt und besitzen Gelgehalte (als Maß für die vernetzten Anteile) von größer 50 Gew.-%, insbesondere von 80 - 98 Gew.-%.

Bevorzugte Kautschuke sind Polymerisate aus der Reihe der Dienkautschuke, Acrylatkautschuke, Olefinkautschuke, Silikonkautschuke und Polymerisatsysteme, die zu mehr als 50 Gew.-% aus einem Kautschukpolymerisat bestehen, z.B. Pfropfpolymerisate von Vinylmonomeren auf eine Kautschukgrundlage bestimmter Vernetzung und Teilchengröße.

Ein weiterer Gegenstand der Erfindung ist die Verwendung der PAS/Kautschuk-Formmassen zur Herstellung geformter Körper.

"Dispergiergüte" im Sinne der Erfindung soll bedeuten, wie gleichmäßig Kautschukmikrogelteilchen in einer Polymermatrix verteilt vorliegen. Sie gibt Anhaltspunkte für die Zahl der Agglomerate und Koagulate in der Formmasse. Diese Dispergiergüte kann nach verschiedenen, bekannten physikalischen Methoden bestimmt werden, z.B. durch elektronenmikroskopische Methoden.

Erfindungsgemäß einsetzbare Polyarylensulfide, vorzugsweise PPS sind bekannt, z.B. US-A 3 354 129, EP-A 171 021 und handelsüblich z.B. Ryton®, TEDUR®.

Flüssige Dispersionen vernetzter, teilchenförmiger Kautschukpolymerisate im Sinne der Erfindung sind bekannt, z.B. DE-A 2 910 154, 2 910 168 und 2 910 153. Sie sind z.B Dispersionen von Dien- und Acrylatkautschuken in den verschiedensten organischen Medien. Aus der DE-A 3 742 180 sind geeignete fließfähige, stabile Dispersionen von Silikonkautschuken gelöst in N,N-substituierten Amiden bekannt.

Organische Medien mit Löseeigenschaften für PAS sind Lösungsmittel die PAS vollständig oder teilweise lösen. Der Lösevorgang kann auch erst bei hohen Verfahrenstemperaturen bis zu 320 °C einsetzen.

Das erfindungsgemäße Verfahren kann wie folgt ausgeführt werden:

1. Das Polyarylensulfid (PAS), vorzugsweise Polyphenylensulfid (PPS) wird vorgelegt, bevorzugt in Kombination mit einem Lösungsmittel. Verwendet wird vorzugsweise ein PAS mit einer Schmelzviskosität von mindestens 5 Pas, bevorzugt von mindestens 50 -3000 Pas, besonders bevorzugt 80 - 150 Pas (gemessen bei 306 °C und einer Schubspannung von $10^2$ Pa). Das PAS kann in Pulverform oder als Granulat eingesetzt werden. Als Lösungsmittel finden bevorzugt organische Amide und Lactame, insbesondere bevorzugt N-Methylcaprolactam Verwendung. Das Gewichtsverhältnis von PAS zu Lösemittel beträgt 1 Teil zu 100 Teile bis 70 Teile zu 100 Teile, vorzugsweise 10 - 40 Teile zu 100 Teilen. Das PAS wird im Lösungsmittel zwischen Raumtemperatur und 320 °C bei Drücken zwischen Normaldruck und 100 bar, bevorzugt von 220 - 280 °C bei Drücken von 2 - 10 bar, insbesondere bevorzugt bei 260 °C bei Drücken von 2 - 5 bar ganz oder teilweise gelöst.

2. Das Polyarylensulfid (PAS), vorzugsweise PPS, vorzugsweise gelöst oder teilgelöst, wie oben beschrieben, wird mit einer flüssigen Dispersion eines vernetzten teilchenförmigen Kautschukpolymerisates in einem organischen Medium mit Löseeigenschaften für das PAS versetzt. Der Zusatz der flüssigen Dispersion der Kautschukpolymerisate erfolgt vorzugsweise gleichmäßig innerhalb eines Zeitraumes von 5 Minuten bis 2 Stunden, vorzugsweise 5 - 20 Minuten unter Durchmischung im Temperaturbereich von Raumtemperatur bis 320 °C bei Normaldruck bis 100 bar, vorzugsweise bei 220 -280 °C bei 2 -10 bar, besonders bevorzugt bei 260 °C bei 2 - 5 bar. Als organische Medien für die flüssigen Dispersionen der Kautschukpolymerisate werden organische Amide verwendet wie Dimethylformamid, Dimethylacetamid, N-Methylpyrrolidon, N-Methylcaprolactam, Tetramethylharnstoff, Hexamethylphosphorsäure-trisamid, 1,3-Dimethyl-2-imidazolidinon, N-Vinyl-N-methylacetamid, N-Vinylpyrrolidon, N-Vinylcaprolactam, vorzugsweise Dimethylacetamid, N-Methylpyrrolidon, N-Methylcaprolactam, besonders bevorzugt N-Methylcaprolactam.

3. Die nach 1) und 2) erzeugte Polymerisatmischung aus PAS und Kautschukpolymerisat wird anschließend aus dem organischen Medium isoliert.

Die Isolierung kann beispielsweise direkt aus der Mischung von PAS und Kautschukpolymerisat im organischen Medium z.B. durch Filtration oder Zentrifugieren oder durch Abdestillieren des organischen Mediums erfolgen. Vorzugsweise wird zur Isolierung durch Koagulation die Polymerisatmischung vorteilhaft in Wasser oder organische Medien mit geringer Löslichkeit für Polyarylensulfide unter Durchmischung eingetragen oder mit dieser versetzt.

Als organische Medien welche zur Koagulation geringe Löslichkeit für Polyarylensulfide haben, werden bevorzugt aliphatische Alkohole wie $C_1$-$C_6$-Alkohole wie Methanol, Ethanol, Propanol, Isopropanol, Butanol verwendet. Insbesondere bevorzugt sind Methanol und Ethanol.

Nach Koagulation wird die Polymerisatmischung, bestehend aus PAS und Kautschukpolymerisat, z.B. durch Filtration oder Zentrifugieren abgetrennt und kann mit $C_1$-$C_6$-aliphatischen Alkoholen, bevorzugt Methanol und Ethanol gewaschen werden.

Die verwendeten flüssigen Dispersionen der Kautschukpolymerisate besitzen einen Kautschukgehalt von 3 bis 50 Gew.-%, vorzugsweise 5 - 25 Gew.-%.

Die Dispersionen enthalten als Kautschukpolymerisate einerseits Dienkautschuke, Acrylatkautschuke, Olefinkautschuke und Silikonkautschuke oder andererseits Pfropfkauschuke von Vinylmonomeren auf oben genannter Kautschuke mit Kautschukgehalten größer 50 Gew.-%. Vorzugsweise werden Acrylat-, Olefin- und Silikonkautschuke sowie Pfropfpolymerisate von Vinylmonomeren auf eine dieser Kautschukgrundlagen verwendet. Besonders bevorzugt sind als Kautschukpolymerisate Silikonkautschuke und Silikonpfropfkautschuke.

Die Dispersionen der Kautschukpolymerisate in organischen Amiden können wie folgt hergestellt werden: Die wäßrigen Emulsionen der Kautschukpolymerisate werden mit einem organischen Medium, vorzugsweise einem flüssigen Amid, unter Rühren vermischt. Dabei ist es vorteilhaft, das organische Medium vorzulegen und portionsweise oder halbkontinuierlich die wäßrige Emulsion unter guter Durchmischung einzutragen.

Dies kann bei Temperaturen von Zimmertemperatur bis zur Siedetemperatur des eingesetzten organischen Mediums geschehen. Anschließend wird aus der Mischung das Wasser abgetrennt (z.B. durch azeotrope Destillation). Bevorzugt wird das Wasser bei vermindertem Druck (bis $10^{-3}$ bar) durch azeotrope Destillation abgetrennt. Vorzugsweise wird während dieser Destillation weiteres organisches Medium zugegeben, um bei stationärer Polymerkonzentration in organischem Medium zu arbeiten. Nach Abtrennung des Wassers kann die Dispersion durch abdestillieren des organischen Mediums konzentriert werden.

Besonders bevorzugt eingesetzt werden Pfropfkautschuke aus

a) einem vernetzten Silikonkautschuk als Kern und

b) einem darauf pfropfpolymerisiertem vernetztem Acrylatkautschuk.

Der Kern a) besteht aus einem vernetzten Silikonkautschuk aus Siloxan-Einheiten der Formeln Ia -Id

$$R_2SiO; \quad RSiO_{3/2}; \quad R_3SiO_{1/2}; \quad RSiO_2,$$
$$(Ia), \quad (Ib), \quad (Ic), \quad (Id),$$

wobei

R einen einwertigen Rest darstellt.

Die Mengen der verschiedenen Siloxaneinheiten sind dabei so bemessen, daß etwa auf 100 Mol-Einheiten der Formel $R_2SiO$ etwa 0 bis 10 Mol-Einheiten der Formel $RSiO_{3/2}$, 0 bis 1,5 Mol-Einheiten $R_2SiO_{1/2}$ und 0 bis 3 Mol-Einheiten der Formel $RSiO_2$ vorhanden sind.

R kann in Formeln (Ia - Id) ein einwertiger gesättigter Kohlenwasserstoffrest mit 1 bis 18 Kohlenstoffatomen, ein aromatischer $C_6$-$C_{24}$-Rest, vorzugsweise Phenylrest, ein Alkoxyrest, vorzugsweise ein $C_2$-$C_{10}$-Alkoxy-Rest, eine radikalisch angreifbare Gruppe wie Vinyl- oder $C_1$-$C_{10}$-Mercapto-Rest, vorzugsweise Mercaptopropylrest sein.

Bevorzugt sind mindestens 80 % aller Reste R Methyl; besonders bevorzugt sind Kombinationen aus Methyl und Ethyl.

Bevorzugte Silikonkautschuke a) enthalten eingebaute Einheiten radikalisch angreifbarer Gruppen, insbesondere Vinyl-, Allyl-, Chloralkyl-, Mercaptogruppen, vorzugsweise in Mengen von 2 - 10 Mol-%, bezogen auf alle Reste R.

Das auf den Kern a) aufgespropfte Kautschukpolymerisat b) stellt einen teil- bis hochvernetzten Acrylatkautschuk dar und ist ein Polymerisat aus 100 -60 Gew.-% Alkylacrylat, 60 -0 Gew.-% anderen, mit Alkylacrylat copolymerisierbaren Monomeren und 0,1 -10 Gew.-%, bezogen auf die Summe, Alkylacrylat und anderen Monomeren, eines vernetzenden Monomeren mit wenigstens zwei Vinyl und/oder Allylgruppen im Molekül.

Alkylacrylate im Sinne der Erfindung sind $C_1$-$C_{14}$-Alkylacrylate, wie Methyl-, Ethyl-, Butyl, Octyl-, 2-Ethylhexylacrylat, Chlorethylacrylat, Benzylacrylat, Phenethylacrylat, insbesondere $C_1$-$C_6$-Alkylester, bevorzugt Butylacrylat; mit den Alkylacrylaten copolymerisierbare Monomere sind bevorzugt Styrol, $\alpha$-Methylstyrol, Halogenstyrol, Methoxystyrol, Acrylnitril, Methacrylnitril, $C_1$-$C_8$-Alkylmethacrylate, die im Alkylrest gegebenenfalls mit funktionellen Gruppen wie Hydroxyl-, Epoxid-, Amin-Gruppen substituiert sein können, beispielsweise Methyl-, Cyclohexylmethacrylat, Glycidylmethacrylat, Hydroxyethyl-, Hydroxypropylmethacrylat, (Meth)Acrylsaure, Maleinsäure(ester), Fumarsäure, Itaconsäure, (Meth)Acrylamide, Vinylacetat, Vinylpropionat oder N-Methylolverbindungen der (Meth)Acrylamide. Vernetzende Monomere im Sinne der Erfindung sind Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugweise 8 bis 30 Kohlenstoffatomen im Esterrest) wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest) wie Allylmethacrylat; Phosphorsäureester, beispielsweise Triallylphosphat und 1,3,5-Triacrylolylhexahydro-s-triazin. Besonders bevorzugt polyfunktionelle Monomere sind Triallylcyanurat, Triallylisocyanurat, Triallylphosphat, Allylmethacrylat.

Die erfindungsgemäß hergestellten Mischungen aus PAS und Kautschukpolymerisaten zeichnen sich durch eine besonders gute, gleichmäßige Verteilung der Kautschuke (in Form diskreter Partikel) in der PAS-Matrix aus. Sie werden erfindungsgemäß unter besonders schonenden Bedingungen hergestellt. Abbaureaktion des PAS bzw. der Kautschukpolymerisate treten praktisch nicht ein, was bei einer anderen Vermischung, z.B. in einer Schnecke (Compoundieraggregaten) vermehrt zu beobachten ist, besonders dann, wenn vernetzte Kautschuke möglichst gut, z.B. mit Hilfe hoher Scherung in einer PAS-Matrix verteilt werden sollen.

Die erfindungsgemäß hergestellten Mischungen (Blends) eignen sich beispielsweise zur Herstellung von Formkörpern aller Art, z.B. Folien, Fasern, Spritzgußartikeln, vorzugsweise in Kombination mit Füllstoffen.

Sie zeigen verbessertes Zähigkeitsverhalten, verbesserte Formkörper-Oberflächeneigenschaften wie Glanz, Gleichmäßigkeit und Rohton. Die Verteilung (Dispergierung) von Füllstoffen ist verbessert.

## Beispiele

(Anmerkung Gew.-Tl. bedeutet Gewichts-Teile)

Eingesetzte Komponenten

A) Polyphenylensulfid (PPS): Verwendet wurde ein PPS mit einer Schmelzviskosität $[\eta]$ = 100 Pas (gemessen bei 306 °C und einer Schubspannung von $10^2$ Pa).

B) Kautschukpolymerisate:

B1) Silikonkautschukgrundlage

38,4 Gew.-Tl. Octamethylcyclotetrasiloxan, 1,2 Gew.-Tl. Tetramethyltetravinylcyclotetrasiloxan und 1 Gew.-Tl. γ-Mercaptopropylmethyldimethoxysilan werden miteinander verrührt. 0,5 Gew.-Tl. Dodecylbenzolsulfonsäure wurden zugefügt, anschließend 58,4 Gew.-Tl. Wasser innerhalb 1 h zudosiert. Dabei wird intensiv gerührt. Die Voremulsion wird mit Hilfe einer Hochdruckemulsiermaschine zweimal bei 200 bar homogenisiert. Man gibt weitere 0,5 Gew.-Tl. Dodecylbenzolsulfonsäure zu.

Die Emulsion wird 2 h bei 85 °C und anschließend 36 h Raumtemperatur gerührt. Neutralisiert wird mit Hilfe 1N-NaOH. Es resultieren 100 Gew.-Tl. einer stabilen Emulsion mit einem Feststoffgehalt von ca. 37 %.

Der Gelgehalt des Polymers beträgt 93 Gew.-% (in Toluol gemessen).

B2) Silikonkautschukgrundlage mit einer vernetzten Acrylathülle

In einem Reaktor werden unter leichtem Stickstoffstrom 1960 Gew.-Tl. der Silikonemulsion B1) und 115 Gew.-Tl. Wasser vorgelegt und auf 70 °C erwärmt. Dazu fügt man eine Lösung aus 2 Gew.-Tl. Kaliumperoxodisulfat und 80 Gew.-Tl. Wasser. Bei 70 °C werden anschließend die folgenden Zuläufe gleichmäßig innerhalb 5 h zudosiert:

Zulauf 1: 310 Gew.-Tl. n-Butylacrylat
0,9 Gew.-Tl. Triallylcyanurat

Zulauf 2: 6,5 Gew.-Tl. Natriumsalz von $C_{14}$-$C_{18}$-Alkylsulfonsäuren
400 Gew.-Tl. Wasser

Nach Beenden der Zudosierung wird 4 h bei 70 °C nachgerührt. Es wird ein Latex mit einem Feststoffgehalt von 36 % erhalten.

B3) Silikonpfropfkautschuke A

In einem Reaktor werden unter Stickstoff 5.250 Gew.-Tl. der Emulsion B2) und 400 Gew.-Tl. Wasser vorgelegt. Bei 70 °C fügt man eine Lösung aus 3,6 Gew.-Tl. Kaliumperoxodisulfat und 135 Gew.-Tl. Wasser zu. Anschließend werden folgende Zuläufe innerhalb 4 h gleichmäßig zudosiert:

Zulauf 1: 729 Gew.-Tl. Methylmethacrylat
81 Gew.-Tl. n-Butylacrylat

Zulauf 2: 9 Gew.-Tl. Natriumsalz von $C_{14}$-$C_{18}$-Alkylsulfonsäuren
880 Gew.-Tl. Wasser

Es wird nach Beenden der Zudosierung noch 4 h bei 70 °C nachgerührt. Es wird ein Latex mit einem Feststoffgehalt von 36 % erhalten.

B4) Acrylatpfropfkautschuk:

Als Acrylatkautschukgrundlage wurde eine Emulsion eines vernetzten, teilchenförmigen n-Butylacrylatkautschuks mit einem Gelgehalt von 90 % (in Toluol gemessen) verwendet (Herstellung z.B. s. DE-A 3 039 115, Beispiel 2a).

In einem Reaktor wurden unter Stickstoff 4643 Gew.-Tl. der oben beschriebenen Acrylatkautschukemulsion (Feststoffgehalt: 39,8 Gew.-%) und 1260 Gew.-Tl. Wasser vorgelegt. Bei 70 °C fügt man eine Lösung aus 4,2 Gew.-Tl. Kaliumperoxodisulfat und 130 Gew.-Tl. Wasser zu. Anschließend werden folgende Zuläufe innerhalb 5 Stunden gleichmäßig zudosiert:

Zulauf 1: 712 Gew.-Tl. Methylmethacrylat
79 Gew.-Tl. n-Butylacrylat
Zulauf 2: 14 Gew.-Tl. Natriumsalz von $C_{14}$-$C_{18}$ -Alkylsulfonsäuren
1040 Gew.-Tl. Wasser

Nach Beenden der Zudosierung wird noch 4 Stunden bei 70 °C nachgerührt. Der erhaltene Latex besitzt einen Feststoffgehalt von 33,5 Gew.-%. Ein Teil der Kautschukpolymerisate wird aus den Emulsionen B2)-B4) durch Koagulation mit Magnesiumsulfat/Eisessig-Lösung bei 80 - 90 °C gefällt, gewaschen und getrocknet.

C) Herstellung von Dispersionen von Kautschukpolymerisaten in einem organischem Medium

C1) 1000 Gew.-Tl. der Silikonkautschukemulsion gemäß Beispiel B2) bzw. 1000 Gew.-Tl. der Silikonkautschukemulsion gemäß Beispiel B3) werden unter Rühren mit 3000 Gew.-Tl. N-Methylcaprolactam (NMC) vermischt. Bei einer Temperatur von 80 - 90 °C wird unter vermindertem Druck (20 - 30 mbar) das Wasser (als Wasser/NMC-Gemisch) abdestilliert. Wenn das Wasser weitgehend abgetrennt ist, destilliert man bei 100 - 120 °C unter vermindertem Druck soviel N-Methylcaprolactam ab, bis die gebildeten Kautschukpolymerisatdispersionen bei Einsatz der Silikonkautschukemulsion gemäß Beispiel B2) einen Kautschukpolymerisatgehalt von 20 - 25 Gew.-% und bei Einsatz der Silikonkautschukemulsion gemäß Beispiel B3) einen Kautschukpolymerisatgehalt von 15 -20 Gew.-% haben.

C2) 1000 Gew.-Tl. der Acrylatkautschukemulsion gemäß Beispiel B4) werden unter Rühren mit 5000 Gew.-Tl. N-Methylcaprolactam vermischt. Bei einer Temperatur von 80 - 90 °C wird unter vermindertem Druck das Wasser (als Wasser/NMC-Gemisch) abdestilliert; gleichzeitig wird soviel N-Methylcaprolactam zum Ansatz gegeben, wie bei der Destillation abgetrennt wird. Wenn das Wasser weitgehend abgetrennt ist, destilliert man bei 100 - 120 °C unter vermindertem Druck soviel N-Methylcaprolactam ab, bis die Kautschukpolymerisatdispersion einen Kautschukpolymerisatgehalt von 10 - 15 Gew.-% aufweist.

D) Herstellung der PPS/Kautschukkombinationen

DI) mit Hilfe organischer Kautschukdispersionen (erfindungsgemäß)

DI1) In einem Autoklaven werden 150 Gew.-Tl. PPS in 1000 Gew.-Tl. N-Methylcaprolactam (NMC) bei 260 °C und einem Druck von 3 bar unter Rühren gelöst. Dann wird innerhalb von 10 Minuten unter ständigem Rühren 195 Gew.-Tl. der amidischen Dispersion gemäß Beispiel C1) mit einem Feststoffgehalt von 19,5 %, hergestellt aus der Silikonkautschukemulsion gemäß Beispiel B2) gleichmäßig zudosiert, wobei die Innentemperatur zwischen 240 - 260 °C gehalten wird. Nach dem Beenden der Zusodierung wird die Polymerisatmischung in N-Methylcaprolactam auf Raumtemperatur abgekühlt und mit Methanol vermischt. Das Polymerisat wird von Methanol durch Filtration abgetrennt, gewaschen und getrocknet.

DI2) Man verfährt analog den Angaben des Beispiels DI1) mit den folgenden Komponenten:
150 Gew.-Tl. PPS in 1000 Gew.-Tl. N-Methylcaprolactam
330 Gew.-Tl. der amidischen Dispersion gemäß Beispiel C1) (Feststoffgehalt: 19,5 Gew.-%), hergestellt aus der Silikonkautschukemulsion gemäß Beispiel B2).

DI3) Man verfährt analog den Angaben Beispiel DI1) mit den folgenden Komponenten:
150 Gew.-Tl, PPS in 3000 Gew.-Tl. N-Methylcaprolactam
630 Gew.-Tl. der amidischen Dispersion gemäß Beispiel C1) (Feststoffgehalt: 19,5 Gew.-%), hergestellt aus der Silikonkautschukemulsion gemäß Beispiel B2).

DI4) Man verfährt analog den Angaben des Beispiels DI1) mit den folgenden Komponenten:

150 Gew.-Tl. PPS in 1000 Gew.-Tl. N-Methylcaprolactam

245 Gew.-Tl. der amidischen Dispersion gemäß Beispiel C1) (Feststoffgehalt: 15,4 Gew.-%), hergestellt aus der Silikonkautschukemulsion gemäß Beispiel B3).

Die PPS/Kautschukkombination DI1) - DI4) werden bei 310 °C zu Granulat verarbeitet.

DII) Vergleichsversuche:

Die Polyphenylensulfidmassen wurden durch Mischen der nachfolgenden Basiskomponenten in den angegebenen Mengenverhältnissen mit einem 30 mm Werner u. Pfleiderer-Doppelwellenextruder bei einer Temperatur von 310 °C hergestellt und granuliert:

DII1): PPS: 80 Gew.-Tl. Silikonkautschuk gemäß Beispiel B2): 20 Gew.-Tl.

DII2): PPS: 70 Gew.-Tl. Silikonkautschuk gemäß Beispiel B2): 30 Gew.-Tl.

DII3): PPS: 55 Gew.-Tl. Silikonkautschuk gemäß Beispiel B2): 45 Gew.-Tl.

DII4): PPS: 80 Gew.-Tl. Silikonkautschuk gemäß Beispiel B3): 20 Gew.-Tl.

E) Vergleich der Kombination D

Von den hergestellten Formkörpern der Proben DI1) -DI4) werden Ultradünnschnitte angefertigt. Die Silikonkautschukteilchen werden mit $OsO_4$ kontrastiert und erscheinen in den Abbildungen dunkel (Vergrößerung: 20 000 und 8 000-fach). Analog wird mit den Proben DII1) - DII4) verfahren.

Aus den elektronenmikroskopischen Aufnahmen der nach dem erfindungsgemäßen Verfahren DI hergestellten Proben DI1) - DI4) ist deutlich die besonders gute, gleichmäßige Verteilung der Silikonkautschuke (in Form diskreter Partikel) erkennbar (s. z.B. Aufnahme der Probe DI1) Figur bzw. Abbildung 1).

Im Vergleich hierzu zeigen die elektronenmikroskopischen Aufnahmen der nach dem Verfahren DI1 (Schmelzcompoundierung) hergestellten PPS/Silikonkautschukmischungen DII1) - DII4), daß die Silikonkautschukteilchen in Agglomeraten zusammengelagert sind, deren Abmessungen mehrere µm betragen können (s. z.B. Aufnahme der Probe DII1) Figur 2 bzw. Abbildung 2). Als Beispiel für die obigen Ausführungen verdeutlicht die elektronenmikroskopische Aufnahme der Probe DI1) im Vergleich zu der Probe DI1) den obigen Sachverhalt (s. Abb. 1 im Vergleich zu Abb. 2).

PPS-Formmassen, hergestellt nach dem erfindungsgemäßen Verfahren, besitzen aufgrund ihres Kautschukgehaltes verbesserte physikalische Eigenschaften; wegen der hohen Dispergiergüte der Kautschukpolymerisatpartikel sind Formkörperoberflächeneigenschaften wie Glanz, Schlierenstörungen, Fließnahtfestigkeit besonders vorteilhaft. Die Neigung zur Stippenbildung ist durch die gute Kautschukverteilung wesentlich vermindert, was sich besonders bei der thermoplastischen Herstellung von dünnwandigen Formkörpern, Platten, Folien oder Fasern bemerkbar macht.

Abbildung 1: elektronenmikroskopische Aufnahme der Probe DI 1

Ultradünnschicht mit anschließender $OsO_4$-Kontrastierung

Abbildung 2: elektronenmikroskopische Aufnahme der Probe DII 1

Ultradünnschicht mit anschließender $OsO_4$-Kontrastierung

## Ansprüche

1. Verfahren zur Herstellung von Mischungen hoher Dispergiergüte aus 20 bis 90 Gew.-% Polyarylensulfiden und 10 bis 80 Gew.-% teilchenförmigen, wenigstens partiell vernetztem Kautschukpolymerisat, in dem man

a) ein Polyarylensulfid gegebenenfalls in einem Lösungsmittel, mit einer flüssigen Dispersion eines vernetzten, teilchenförmigen Kautschukpolymerisates in einem organischen Medium mit Löseeigenschaften für das Polyarylensulfid versetzt und

b) diese Polymerisatmischung aus Polyarylensulfid und Kautschukpolymerisat anschließend aus dem organischen Medium isoliert.

2. Verfahren nach Anspruch 1), dadurch gekennzeichnet, daß als organische Medien mit Löseeigenschaften für Polyarylensulfide organische Amide verwendet werden.

3. Verfahren nach Anspruch 1), dadurch gekennzeichnet, daß die Isolierung mit Hilfe einer Koagulation der Polymerisatmischung durchgeführt wird.

4. Verfahren nach Anspruch 1), dadurch gekennzeichnet, daß man als Kautschukpolymerisate einerseits Dienkautschuke, Acrylatkautschuke, Olefinkautschuke und Silikonkautschuke mit einer mittleren Teilchengröße ($d_{50}$) von 0.05 - 3 µm und einem Gelgehalt von wenigstens 50 Gew.-% oder andererseits Pfropfkautschuke von Vinylmonomeren auf oben genannte Kautschuke mit Kautschukgehalten von größer 50 Gew.-% einsetzt.

5. Thermoplastische Polyarylensulfidformmassen erhältlich gemäß Anspruch 1.

6. Verwendung der nach Anspruch 1 hergestellten Formmassen zur Herstellung geformter Körper.

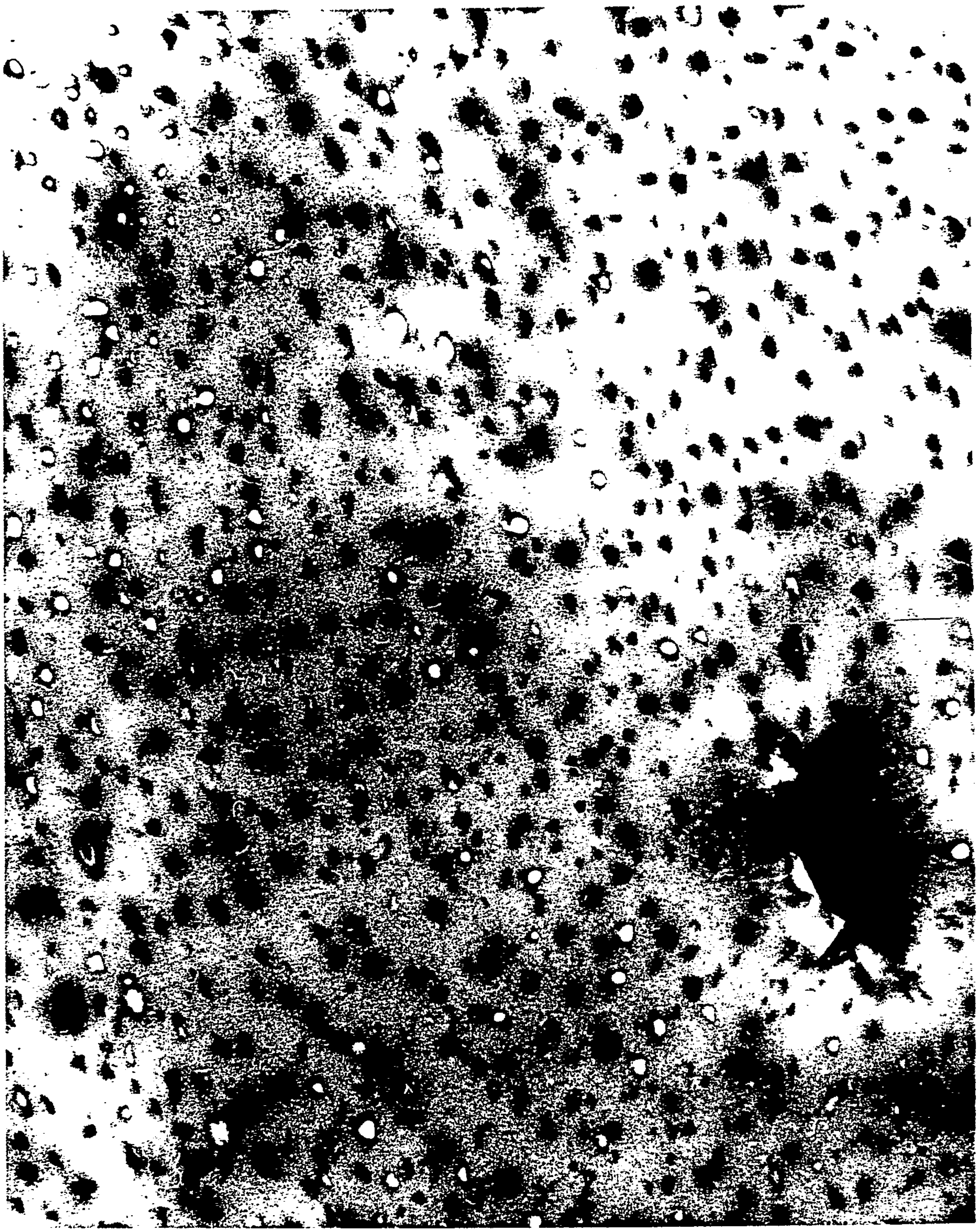


FIG.1

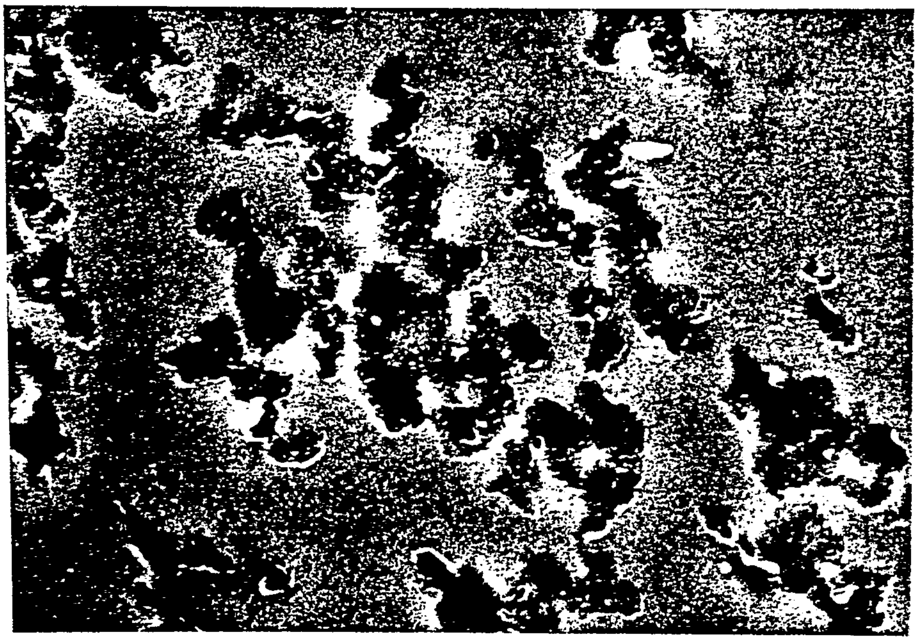


FIG.2